# EUROPÄISCHE PATENTANMELDUNG

(11) **EP 4 810 274 A1**
(43) Veröffentlichungstag der Anmeldung: **23.09.2026**
(21) Anmeldenummer: 25164024.9
(22) Anmeldetag: 17.03.2025
(51) Int. Cl.: B60G 7/02, B60G 9/00, B60G 11/04, B60G 11/113, B60G 11/27, B60G 13/00

(54) **NUTZFAHRZEUG MIT ACHSAGGREGAT**

(71) Anmelder: Schmitz Cargobull AG, 48341 Altenberge (DE)
(72) Erfinder: Schlichting, Dr. Timo, 48429 Rheine (DE)
(74) Vertreter: Cohausz & Florack

(57) **Zusammenfassung**

Beschrieben und dargestellt ist ein Achsaggregat (4) für ein Nutzfahrzeug (1), insbesondere Lastkraftwagen, Anhänger oder Sattelauflieger, mit einem Achskörper (48), einem sich quer zum Achskörper (48) erstreckenden und mit dem Achskörper (48) verbundenen Längslenker (10) und mit einem Achsbock (12) zum Abstützen des Längslenkers (10) gegenüber dem Chassis (6) des Nutzfahrzeugs (1). Damit das Achsaggregat besonders stabil und kostengünstig ist sowie einen hohen Federungskomfort aufweist, ist vorgesehen, dass der Längslenker (10) wenigstens im Bereich des Achsbocks (12) zwei sich wenigstens im Wesentlichen parallel zueinander erstreckende Teillängslenker (16) umfasst und dass die Teillängslenker (16) über ein den Achsbock (12) wenigstens bereichsweise durchgreifendens Stützelement (13) am Achsbock (12) abgestützt sind.

## Beschreibung

Die Erfindung betrifft ein Achsaggregat für ein Nutzfahrzeug, insbesondere Lastkraftwagen, Anhänger oder Sattelauflieger, mit einem Achskörper, einem sich quer zum Achskörper erstreckenden und mit dem Achskörper verbundenen Längslenker und mit einem Achsbock zum Abstützen des Längslenkers gegenüber dem Chassis des Nutzfahrzeugs.

Nutzfahrzeuge sind in unterschiedlichen Ausgestaltungen bekannt, etwa in Form von Lastkraftwagen, Anhängern oder Sattelaufliegern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge meist unterschiedliche Arten von Aufbauten auf, die einen Laderaum umgrenzen, welcher der Aufnahme der zu transportierenden Ladung dient.

So sind beispielsweise sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten beladen zu können. Wenn die wenigstens eine Plane entlang der Seitenwand verschoben werden kann, spricht man auch von sogenannten Curtainsidern.

Neben Planenaufbauten sind sogenannte Kofferaufbauten bekannt. Wie bei Planenaufbauten ist bei Kofferaufbauten die Stirnwand meist als feste Wand ausgebildet und die Rückwand regelmäßig durch zwei Flügeltüren gebildet. Im Gegensatz zu Planenaufbauten sind bei Kofferaufbauten allerdings die Seitenwände und das Dach durch feste Wände verschlossen. Die Seitenwände, das Dach und die Stirnwand sowie bedarfsweise der Boden von Kofferaufbauten sind meist durch Paneele gebildet, die äußere strukturgebende Decklagen und dazwischen eine Kernlage aus geschäumtem Kunststoff umfassen.

Unabhängig von der Art des Aufbaus weisen Nutzfahrzeuge ein Chassis und wenigstens eine daran befestigte Nutzfahrzeugachse als Teil eines Fahrwerks auf, die mit Rädern zum Bewegen des Nutzfahrzeugs verbunden ist. Zur Befestigung der Räder an der Nutzfahrzeugachse weist die Nutzfahrzeugachse für gewöhnlich an ihren gegenüberliegenden Längsenden jeweils ein Radmontageelement auf, bei dem es sich um einen sogenannten Radkopf handeln kann. Die Radmontageelemente sind typischerweise drehbar an der Nutzfahrzeugachse gelagert, so dass ein Abrollen der an den Radmontageelementen befestigten Räder möglich ist. Diese Räder sind grundsätzlich selbst nicht angetrieben.

Zur Anbindung der Nutzfahrzeugachse an das Chassis des Nutzfahrzeugs sind sogenannte Achsaggregate vorgesehen, die ein Teil der Nutzfahrzeugachse umfassen, nämlich einen Achskörper. Bei diesem Achskörper handelt es sich insbesondere um ein Achsrohr der Nutzfahrzeugachse. Das Achsrohr kann sich dabei wenigstens im Wesentlichen über die gesamte Länge der Nutzfahrzeugachse erstrecken oder auch nur einen kurzen Abschnitt der Nutzfahrzeugachse darstellen. Neben dem Achskörper des Achsaggregats weist dieses noch einen sich quer zum Achskörper und damit wenigstens im Wesentlichen in Längsrichtung des Nutzfahrzeugs erstreckenden Längsträger auf. Der Längsträger ist dabei direkt oder indirekt mit dem Achskörper und auf gegenüberliegenden Seiten des Achskörpers einerseits mit einem Achsbock und andererseits mit einem Federbalg verbunden. Die Verbindung des Längsträgers mit dem Achsbock ist als Schwenkverbindung ausgebildet, so dass der Längsträger und damit die Nutzfahrzeugachse um den Achsbock schwenken kann, damit Straßenunebenheiten absorbiert werden können. Dabei wird der an dem Längslenker angebundene Federbalg abwechselnd komprimiert und wieder auseinandergezogen. Der Federbalg ist wie der Achsbock fest mit dem Chassis des Nutzfahrzeugs verbunden. Mithin stützt sich die Nutzfahrzeugachse über den Längslenker unter anderem an dem Achsbock ab, der sich seinerseits wiederum am Chassis, insbesondere einem Längsträger des Chassis, des Nutzfahrzeugs abstützt.

Achsaggregate müssen hohe Kräfte aufnehmen können und sollen zugleich kostengünstig sein sowie einen hohen Federungskomfort ermöglichen. Diese sich teils entgegenstehenden Vorgaben sind bei bestehenden Achsaggregaten noch nicht zufriedenstellend gelöst.

Daher liegt der vorliegenden Erfindung die Aufgabe zugrunde, ein Achsaggregat und ein Nutzfahrzeug jeweils der eingangs genannten und zuvor näher erläuterten Art derart auszugestalten und weiterzubilden, dass dieses besonders stabil und kostengünstig ist sowie einen hohen Federungskomfort aufweist.

Diese Aufgabe ist bei einem Achsaggregat nach dem Oberbergriff von Anspruch 1 dadurch gelöst, dass der Längslenker wenigstens im Bereich des Achskörpers zwei sich wenigstens im Wesentlichen parallel zueinander erstreckende Teillängslenker umfasst und dass die Teillängslenker über ein den Achsbock wenigstens bereichsweise durchgreifendes Stützelement am Achsbock abgestützt sind.

Die genannte Aufgabe ist zudem bei einem Nutzfahrzeug nach Anspruch 14 gelöst.

Die Trennung des Längslenkers wenigstens im Bereich des Achsbocks in wenigstens zwei Teillängslenker, die sich wenigstens im Wesentlichen parallel zueinander erstrecken, ermöglicht es, einerseits den Achsbock und andererseits den Längslenker auf andere Weise auszubilden, als dies bisher erfolgt ist. Dies führt letztlich dazu, dass der Längslenker auf eine besonders vorteilhafte Weise an dem Achsbock abgestützt werden kann. Dies erfolgt über die Teillängslenker und ein mit diesen verbundenes Stützelement, welches wenigstens bereichsweise durch den Achsbock hindurchgreift. Mithin kann auf die Ausbildung von sogenannten Augen am Längslenker verzichtet werden, um den Längslenker an dem Achsbock abzustützen. Die Augen dienen dabei dem Durchstecken eines Bolzens, um den der Längslenker geschwenkt werden kann. Um den Bolzen an seinen gegenüberliegenden Enden zu halten, sind die Achsböcke wenigstens abschnittsweise U-förmig ausgestaltet. Das Auge des Längslenkers kann dabei beispielsweise dadurch gebildet werden, dass das entsprechende Ende des Längslenkers umgebogen oder gerollt wird oder dass ein entsprechend geformtes Bauteil mit dem Ende des Längsträgers verbunden wird. Dies ist nicht nur aufwendig, sondern kann auch zu einem vorzeitigen Versagen des Längslenkers führen.

Erfindungsgemäß ist dagegen vorgesehen, dass die Teillängslenker über ein Stützelement an dem Achsbock abgestützt sind, das abschnittsweise durch den Achsbock hindurchgreift. Dabei können die Teillängslenker grundsätzlich auf sehr unterschiedliche Arten mit dem Stützelement verbunden werden. Es bietet sich jedoch an, wenn sich das Stützelement wenigstens im Wesentlichen zwischen den Teillängslenkern erstreckt und/oder nach Art eines Bolzens ausgebildet ist, um ein einfaches Schwenken des Längsträgers gegenüber dem Achsbock zu ermöglichen. Zudem kann das Stützelement durch einen einzigen Schenkel des Achsbocks oder einen plattenartigen, insbesondere wenigstens im Wesentlichen aus Blech gebildeten, Abschnitt des Achsbocks hindurchgreifen. Es bedarf also weder der Ausbildung eines Auges an dem Längslenker noch der Ausbildung eines U-förmigen Abschnitts des Achsbocks zur Aufnahme des Auges des Längslenkers. Das Achsaggregat kann mithin besonders stabil und kostengünstig ausgebildet werden sowie einen hohen Federungskomfort bereitstellen.

Bei dem erfindungsgemäßen Nutzfahrzeug ist wenigstens ein Achsaggregat der vorgenannten Art mit einem Chassis des Nutzfahrzeugs verbunden, so dass sich das Achsaggregat an dem Chassis abstützt. Vorzugsweise werden pro Nutzfahrzeugachse zwei entsprechende Achsaggregate vorgesehen sein, wobei jedes Achsaggregat dann einer anderen Seite der Nutzfahrzeugachse und/oder einem anderen Längsträger des Chassis zugeordnet sein kann. Die Anbindung von Achsaggregaten an das Chassis eines Nutzfahrzeugs ist grundsätzlich bekannt und kann auch mehr oder weniger in der vorbekannten Weise erfolgen.

Bei einer ersten besonders bevorzugten Ausgestaltung des Achsaggregats ist der Längslenker um das Stützelement gegenüber dem Achsbock schwenkbar vorgesehen. Dies kann bedeuten, dass das Stützelement drehbar am Achsbock gelagert ist, insbesondere drehbar durch den Achsbock hindurchgreifend vorgesehen ist. Zu diesem Zweck kann es sich anbieten, dass das Stützelement durch eine mit dem Blechteil verbundene Buchse des Achskörpers greift. Dann kann eine zuverlässige Abstützung erreicht werden. Zudem kann die Buchse beim Schwenken des Längslenkers tordieren, beispielsweises um bis zu 15°.

Um Kosten zu sparen, kann der Achsbock wenigstens im Bereich des Stützelements als Blechteil ausgebildet sein. Dieses Blechteil kann dann auch bedarfsweise die Buchse zur Aufnahme des Stützelements tragen. Zudem kann das Stützelement in einfacher Weise mit den Teillängslenkern verschraubt sein. Zwischen den Verschraubungen ist das Stützelement dann vorzugsweise durch den Achsbock, insbesondere durch die Buchse des Achsbocks, hindurchgeführt.

Einfach und kostensparend ist es ebenfalls, wenn der Achsbock wenigstens abschnittsweise aus einem wenigstens im Wesentlichen plattenartigen Blechteil gebildet ist. Dieses Blechteil kann vorzugsweise so angeordnet sein, dass es sich in einem mit dem Nutzfahrzeug verbundenen Zustand wenigstens im Wesentlichen vertikal erstreckt, beispielsweise von einem Längsträger des Chassis des Nutzfahrzeugs wenigstens im Wesentlichen vertikal nach unten in Richtung des durch das Blechteil geführten Stützelements. Zusätzlich oder alternativ kann der Achsbock zum seitlichen Verbinden mit einem Längsträger eines Chassis des Nutzfahrzeugs ausgebildet sein. Dabei ist es besonders zweckmäßig und einfach, wenn das Blechteil des Achsbocks zum, vorzugsweise seitlichen, Verbinden mit einem Längsträger eines Chassis des Nutzfahrzeugs ausgebildet ist. Unabhängig davon lässt sich die Montage vereinfachen, wenn der Achsbock zum Verschrauben mit dem Längsträger des Chassis ausgebildet ist.

Zum Dämpfen von Schwenkbewegungen des Achskörpers gegenüber dem Achsbock während der Fahrt des Nutzfahrzeugs kann das Achsaggregat einen entsprechenden Dämpfer aufweisen. Dabei kann es sich anbieten, dass der Längslenker wenigstens im Bereich des Dämpfers zwei sich wenigstens im Wesentlichen parallel zueinander erstreckende Teillängslenker umfasst. Dies ermöglicht es dem Dämpfer, platzsparend und funktionell vorteilhaft wenigstens abschnittsweise zwischen den Teillängslenkern hindurchzugreifen. Auf diese Weise kann der Dämpfer beispielsweise recht steil ausgerichtet werden, was das Dämpfungsverhalten des Dämpfers und den Fahrkomfort des Nutzfahrzeugs verbessert. Unabhängig davon wird es der Einfachheit halber bevorzugt sein, wenn sich die Teillängslenker durchgehend vom Bereich des Achsbocks bis in den Bereich des Dämpfers erstrecken, ohne zwischendurch wieder zu einem gemeinsamen einheitlichen Längslenkerabschnitt zusammengeführt zu werden.

Um den Dämpfer in eine geeignete Ausrichtung bringen zu können, bietet es sich an, wenn der Dämpfer wenigstens abschnittsweise unterhalb der beiden Teillängslenker mit dem Achskörper und wenigstens abschnittsweise oberhalb der beiden Teillängslenker mit dem Achsbock verbunden ist. Diese Verbindungen können dabei wahlweise direkt oder indirekt erfolgen. Unabhängig davon ist es für die Dämpfung der Nutzfahrzeugsachse vorteilhaft, wenn sich der Dämpfer wenigstens im Wesentlichen parallel zu den beiden Teillängslenkern und/oder dem Längslenker erstreckt, insbesondere in der Längsrichtung des Längslenkers gesehen. So kann das Dämpfungsverhalten des Dämpfers gut genutzt und der Dämpfer langlebig eingesetzt werden.

Für ein stabiles, einfaches und kostengünstiges Anbinden des Dämpfers an den Achsbock, kann der Achsbock eine Dämpferlasche aufweisen, mit der der Dämpfer verbunden ist. Dies gilt insbesondere bei einer ansonsten wenigstens im Wesentlichen plattenförmigen Ausgestaltung des Achsbocks. Besonders einfach lässt sich die Dämpferlasche bereitstellen, wenn diese aus einem umgeformten Blech ausgebildet ist. Zweckmäßig und einfach ist es alternativ oder zusätzlich auch, wenn die Dämpferlasche mit dem Blechteil des Achsbocks verbunden ist.

Als Dämpfer kommt aufgrund der guten Dämpfungswirkung insbesondere ein pneumatischer oder hydraulischer Dämpfer in Frage. Entsprechende Dämpfer können dabei einfach und effektiv als Teleskopdämpfer ausgebildet sein. Bei Letzteren haben sich insbesondere sogenannte Einrohrstoßdämpfer oder Zweirohrstoßdämpfer bewährt.

Zur stabilen und dauerhaften Anbindung des Längslenkers an den Achskörper kann dieser mit wenigstens einem sogenannten Achslappen verbunden sein. Dabei sind entsprechende Achslappen dann besonders zweckmäßig, wenn der Achskörper ein Achsrohr umfasst. Dann müssen nämlich Maßnahmen getroffen werden, um eine hinreichende Anlagefläche zwischen dem Achsrohr und dem Längslenker bereitzustellen. Der Achslappen kann dann das Achsrohr in Umfangsrichtung des Achsrohrs wenigstens abschnittsweise umgreifen. Damit der Achslappen eine ausreichende Anlagefläche für den Längslenker bereitstellen kann, ohne den Längslenker hierfür besonders aufwendig formen zu müssen, ist es zweckmäßig, wenn der Achslappen das Achsrohr wenigstens um 90°, vorzugsweise wenigstens um 130°, umgreift. Bei Verwendung des wenigstens einen Achslappens ist das Achsrohr über den Achslappen mit dem Längslenker verbunden. Alternativ oder zusätzlich kann aber auch das Achsrohr über den Achslappen mit dem Dämpfer verbunden sein. Auch Letzteres vereinfacht die Anbindung des Dämpfers an den Achskörper.

Auch im Bereich des wenigstens einen Achslappens ist es zweckmäßig, wenn der Längslenker dort zwei sich wenigstens im Wesentlichen parallel zueinander erstreckende Teillängslenker umfasst. Dies dient der Anbindung des Längsträgers an den Achslappen und der Funktion des Achsaggregats. Die Teillängslenker sind in diesem Bereich, insbesondere separat, mit dem wenigstens einen Achslappen verbunden. Dies ermöglicht es auch, dass der Dämpfer einfach und funktional zwischen den beiden Teillängslenkern durchgeführt mit dem Achslappen verbunden werden kann. Dabei können sich einfach und kostengünstig die Teillängslenker durchgehend vom Bereich des Dämpfers bis in den Bereich des wenigstens einen Achslappens erstrecken, ohne zwischendurch wieder zu einem gemeinsamen einheitlichen Längslenkerabschnitt zusammengeführt zu werden.

Zwischen den Teillängslenkern im Bereich des wenigstens einen Achslappens kann wenigstens ein Puffer angeordnet sein. Mithilfe eines solchen Puffers kann ein Anschlagen des Achskörpers an das Chassis des Nutzfahrzeugs abgepuffert werden. Dies kann relevant sein, wenn die Nutzfahrzeugachse übermäßig ausgelenkt wird, der Federbalg Luft verliert oder das Fahrzeug etwa beim Transport auf einer Fähre oder einem Zug ohne Luft im Federbalg bewegt wird. Dabei ist die Anordnung des Puffers zwischen den Teillängslenkern sehr einfach und kostengünstig möglich. Zudem bietet es sich an, wenn der Puffer aus Kunststoff oder Gummi gebildet ist, um ein hohes Maß an Verformungsenergie aufzunehmen. Dabei kann der Puffer auch einfach an dem wenigstens einen Achslappen des Achskörpers angebunden sein.

Für einen guten Federungskomfort bietet es sich grundsätzlich an, wenn der Längslenker mit einem dem Achsbock abgewandten Ende mit einem Federbalg verbunden ist. Ein Schwenken der Nutzfahrzeugachse um den Achsbock kann dann über den Federbalg abgefedert werden. Dies ist besonders einfach, funktional und kostengünstig möglich, wenn der Längslenker wenigstens im Bereich des Federbalgs zwei sich wenigstens im Wesentlichen parallel zueinander erstreckende Teillängslenker umfasst. Die beiden Teillängslenker können dann separat mit dem Federbalg verbunden sein. Dabei können sich einfach und kostengünstig die Teillängslenker durchgehend vom Bereich des wenigstens einen Achslappens bis in den Bereich des Federbalgs erstrecken, ohne zwischendurch wieder zu einem gemeinsamen einheitlichen Längslenkerabschnitt zusammengeführt zu werden.

Die Teillängslenker können sehr einfach und dauerhaft mit dem Federbalg verbunden sein, und zwar insbesondere separat voneinander. So kann sich der Federbalg einfach und zuverlässig nach unten auf den Teillängslenkern abstützen.

In einer besonders stabilen und kostengünstigen Ausgestaltung des Achsaggregats, das zudem einen hohen Federungskomfort bereitstellen kann, ist es bevorzugt, wenn die Teillängslenker separat voneinander ausgebildet sind. Sie müssen dabei untereinander nicht direkt verbunden sein, sondern können sich separat voneinander vom Bereich des Achsbocks bis in den Bereich des Federbalgs erstrecken und dabei nur über das Stützelement, den wenigstens einen Achslappen und/oder den Federbalg verbunden sein. Dies ermöglicht es auch, die Teillängslenker als Gleichteile auszubilden. Es müssen dann nicht paarweise unterschiedliche Teillängslenker hergestellt und gelagert werden, um den gemeinsamen Längsträger zu bilden.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes, erfindungsgemäßes Nutzfahrzeug mit erfindungsgemäßen Achsaggregaten in einer perspektivischen Ansicht,
- Fig. 2: ein Detail des Nutzfahrzeugs aus Fig. 1 im Bereich eines erfindungsgemäßen Achsaggregats in einer Schnittansicht von der Seite und
- Fig. 3A-B: das Achsaggregat aus Fig. 2 in unterschiedlichen perspektivischen Ansichten.

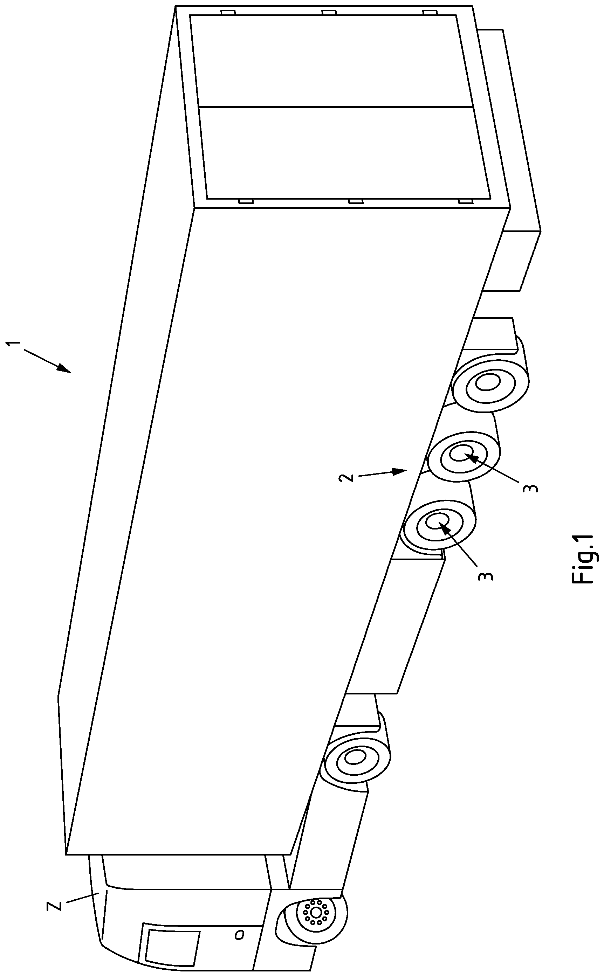

In der Fig. 1 ist ein von einer Zugmaschine Z gezogenes Nutzfahrzeug 1 in Form eines Sattelaufliegers dargestellt. Das Nutzfahrzeug 1 umfasst ein Fahrwerk 2, dass selbst wiederum drei Nutzfahrzeugachsen 3 aufweist, wobei auch eine andere Anzahl an Nutzfahrzeugachsen 3 denkbar ist.

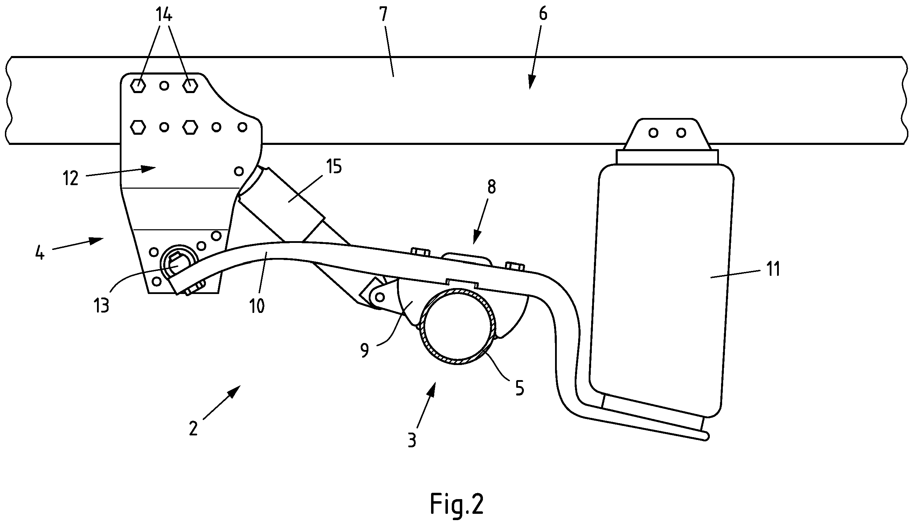

In der Fig. 2 ist eine Schnittansicht im Bereich eines Achsaggregats 4 des Fahrwerks 2 dargestellt. Jeder Nutzfahrzeugachse 3 des Nutzfahrzeugs 1 sind zwei Achsaggregate 4 zugeordnet, und zwar auf gegenüberliegenden Seiten der Nutzfahrzeugachse 3. Dabei ist es nicht zwingend erforderlich, dass die Nutzfahrzeugachse 3 ein von einer Seite zur gegenüberliegenden Seite durchgehendes Achsrohr 5 umfasst. Beispielsweise im Falle einer Einzelradaufhängung wird auf ein solch durchgehendes Achsrohr 5 verzichtet. Auch muss das Achsrohr 5 nicht zwingend im klassischen Sinne mit einem kreisförmigen Querschnitt rohrförmig ausgebildet sein. Die Achsaggregate 4 verbinden die Nutzfahrzeugachse 3 mit dem Chassis 6 des Nutzfahrzeugs 1, insbesondere zu deren Längsträgern 7. Dabei umfassen die Achsaggregate 4 einen Teil der Nutzfahrzeugachse 3, nämlich einen Achskörper 8, der wenigstens dem Anbinden der Nutzfahrzeugachse 3 an das Chassis 6 dient. Der Achskörper 8 ist mit einem sogenannten Radkopf verbunden, welcher einen Radflansch zum Anschrauben eines Rads aufweist und zudem regelmäßig eine Bremsscheibe umfasst. Letzteres ist aber nicht zwingend erforderlich. Die Radköpfe bilden dabei den Teil der Nutzfahrzeugachsen 3, die sich beim Verfahren des Nutzfahrzeugs 1 drehen. Die Achskörper 8 und gegebenenfalls das Achsrohr 5 der Nutzfahrzeugsachse 3 drehen sich dagegen nicht, wenn das Nutzfahrzeug 1 verfahren wird.

In der Fig. 2 ist die Schnittebene in der Blickrichtung hinter einem Radkopf der Nutzfahrzeugachse 3 angeordnet. Radköpfe sind aus dem Stand der Technik bekannt und bedürfen daher vorliegend keiner eingehenderen Erläuterung. Die Schnittebene erstreckt sich durch den Achskörper 8, genauer gesagt durch das Achsrohr 5 des Achskörpers 8. Das Achsrohr 5 ist mit einem Achslappen 9 verbunden, der sich etwa über 180° des Umfangs des Achsrohrs 5 um das Achsrohr 5 herum erstreckt und in diesem Bereich an dem Achsrohr 5 anliegt sowie mit dem Achsrohr 5 verschweißt ist. Der Achslappen 9 ist dabei als Teil des Achskörpers 8 mit einem Längslenker 10 verschraubt, der sich quer zur Nutzfahrzeugachse 3 erstreckt und gegenüberliegende Enden bereitstellt, die auf gegenüberliegenden Seiten des Achskörpers 5 angeordnet sind.

Das in der Fig. 2 rechts dargestellte Ende des Längslenkers 10, der sich etwa parallel zum zugehörigen Längsträger 7 des Chassis 6 erstreckt, ist mit einem Federbalg 11 einer Luftfederung verbunden. Der Federbalg 11 stützt sich nach unten auf dem Längslenker 10 und nach oben am Chassis 6, insbesondere am Längsträger 7 des Chassis 6, ab. Letzteres ist insbesondere dann der Fall, wenn die Nutzfahrzeugachse 3 während der Fahrt einfedert. Dieses Einfedern wird dann durch den Federbalg 11, genauer durch die Kompression der Druckluft im Federbalg 11, begrenzt. Bei dem dargestellten und insoweit bevorzugten Achsaggregat 4 ist der Längslenker 10 mit dem Federbalg 11 verschraubt.

Das in der Fig. 2 links dargestellte Ende des Längslenkers 10 ist an einem Achsbock 12 festgelegt und abgestützt. Dazu greift der Längslenker 10 mit einem Stützelement 13 durch den unteren Abschnitt des Achsbocks 12 hindurch, und zwar derart, dass der Längslenker 10 beim Ein- und Ausfedern der Nutzfahrzeugachse 3 um den Achsbock 12 herum nach oben und unten schwenken kann. Der Achsbock 12 wird dabei an dem zugehörigen Längsträger 7 des Chassis 6 abgestützt und gehalten. Dies erfolgt, indem der Achsbock 12 mit seinem oberen Abschnitt mit der Außenseite des Längsträgers 7 verbunden ist. Grundsätzlich könnte der Achsbock 12 aber auch mit der Innenseite des Längsträgers 7 verbunden sein. Die Verbindung des Achsbocks 12 mit dem Längsträger 7 ist bei dem dargestellten und insoweit bevorzugten Achsaggregat 12 durch Schraubverbindungen 14 gewährleistet.

Zur Dämpfung der Schwingungen der Nutzfahrzeugachse 3 um den Achsbock 12 des Achsaggregats 4 herum ist das Achsaggregat 4 mit einem Dämpfer 15 versehen, der mit einem Ende am Achsbock 12 und mit dem gegenüberliegenden Ende am Achslappen 9 festgelegt ist. Bei dem dargestellten und insoweit bevorzugten Dämpfer 15 handelt es sich um einen hydraulischen Dämpfer 15, der als Teleskopdämpfer ausgebildet ist. Auch die Verbindungen des Dämpfers 15 mit dem Achslappen 9 und dem Achsbock 14 sind als Schraubverbindungen ausgebildet.

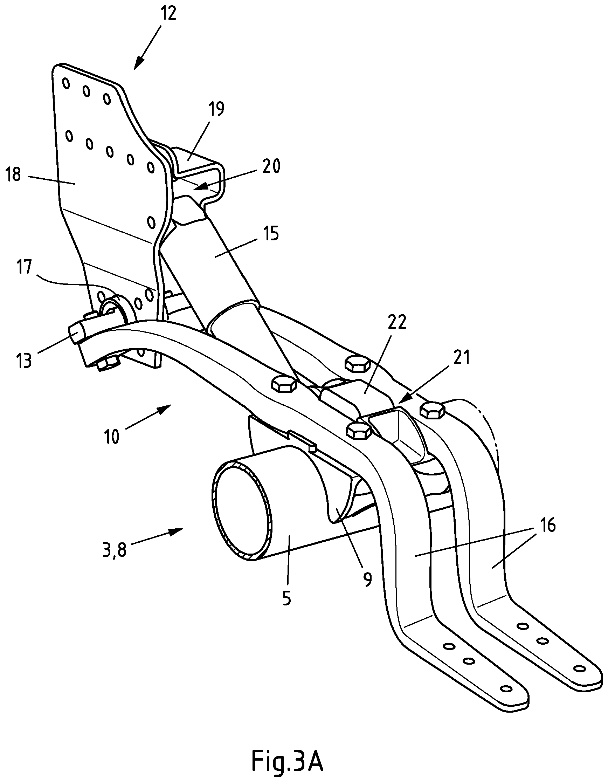

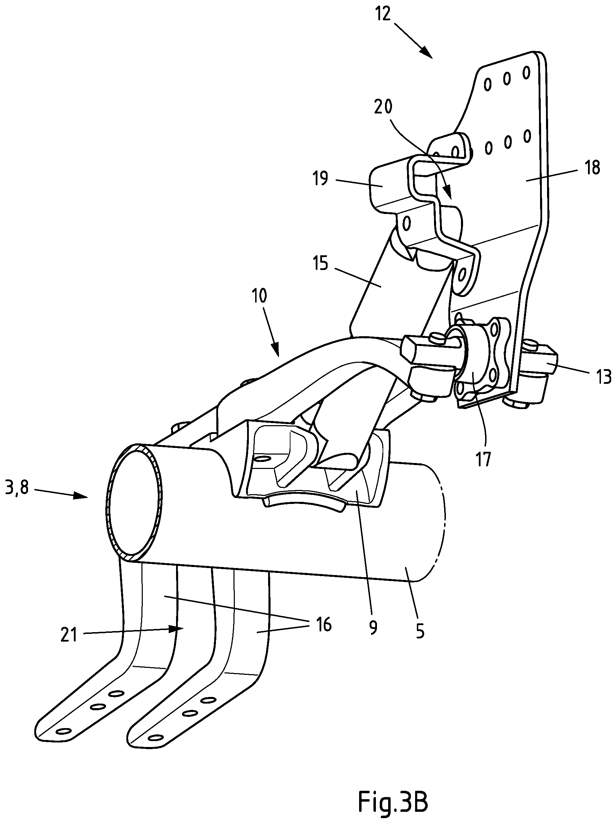

In der Fig. 3A-B ist das Achsaggregat 4 im Detail in unterschiedlichen perspektivischen Ansichten dargestellt. Der Federbalg 11 ist dabei ebenso weggelassen worden wie der Längsträger 7 des Chassis 6, an dem das Achsaggregat 4 festgelegt ist. Der dargestellte und insoweit bevorzugte Längslenker 10 wird aus zwei wenigstens im Wesentlichen gleich, insbesondere identisch, ausgebildeten Teillängslenkern 16 und dem Stützelement 13 gebildet. Das Stützelement 13 ist mit den beiden Teillängslenker 16 verschraubt, wobei das Stützelement 13 durch eine Buchse 17 des Achsbocks 12 hindurchgreift, in der das Stützelement 13 drehbar gelagert ist. Die Buchse 17 ist dabei mit dem angrenzenden Blechteil 18 des Achsbocks 12 verschraubt. Dementsprechend erstrecken sich die Teillängslenker 16 im Bereich des Achsbocks 12 wenigstens im Wesentlichen parallel zueinander und zudem wenigstens im Wesentlichen auf der gleichen Höhe. Dabei greift das untere Ende des Achsbocks 12, konkret das Blechteil 18 des Achsbocks 12, nach Art eines Schwerts in den Zwischenraum zwischen die beiden Teillängslenker 16 ein.

Die Teillängslenker 16 erstrecken sich auch im Bereich des Dämpfers 15 wenigstens im Wesentlichen parallel zueinander und wenigstens auf gleicher Höhe. Der Dämpfer 15 ist dabei abschnittsweise zwischen den Teillängslenkern 16 vorgesehen. Dabei ist der Dämpfer 15 mit seinem unteren Ende an dem Achslappen 9 festgelegt, während das obere Ende des Dämpfers 15 am Achsbock 12 festgelegt ist, und zwar so, dass der Dämpfer 15 relativ steil ausgerichtet ist, was den Federungskomfort verbessert. Da der Achsbock 12 im Wesentlichen aus einem nur leicht gebogenen Blechteil 18 gebildet ist, an dem die Buchse 17 zum Festlegen des Längslenkers 10 verschraubt ist, ist ergänzend noch eine Dämpferlasche 19 des Achsbocks 12 vorgesehen. Die dargestellte und insoweit bevorzugte Dämpferlasche 19 ist aus einem Blech durch mehrfaches Umformen, insbesondere Abkanten gebildet. Die Dämpferlasche 19 und das Blechteil 18 bilden einen Zwischenraum 20 des Achsbocks 12, in dem das obere Ende des Dämpfers 15 aufgenommen und an dem Achsbock 12 festgelegt ist.

Die Teillängslenker 16 erstrecken sich auch im Bereich des Achslappens 9 wenigstens im Wesentlichen parallel zueinander und wenigstens auf gleicher Höhe. Jeder der beiden Teillängslenker 16 ist separat mit dem Achslappen 9 verschraubt. Dabei bilden die beiden Teillängslenker 16 einen Spalt 21 zwischen einander aus, in dem ein Puffer 22 angeordnet und an dem Achslappen 9 festgelegt ist. Der Puffer 22 ist aus Gummi gebildet und soll verhindern, dass das Achsaggregat 4 oder das Chassis 6 Schaden nimmt, wenn das Achsaggregat 4 gegen das Chassis 6 stößt, etwa weil der Federbalg 11 das Einfedern der Nutzfahrzeugachse 3 nicht hinreichend begrenzt.

Die Teillängslenker 16 erstrecken sich auch im Bereich des Federbalgs 11 wenigstens im Wesentlichen parallel zueinander und wenigstens auf gleicher Höhe. Jeder der beiden Teillängslenker 16 ist dabei mit dem unteren Ende des Federbalgs 11 verbunden, und zwar verschraubt. Der Federbalg 11 kann das Einfedern der Nutzfahrzeugachse 3 abfedern, wenn der Längslenker 16 um das Stützelement 13 im Achsbock 12 nach oben geschwenkt wird.

Bei dem dargestellten und insoweit bevorzugten Achsaggregat 4 sind die Teillängslenker 16 separat voneinander und als Gleichteile ausgebildet. Die Teillängslenker 16 sind dabei untereinander nicht direkt verbunden. Der innenliegende Teillängslenker 16 und der außenliegende Teillängslenker 16 können untereinander ausgetauscht werden, da diese Teillängslenker 16 wenigstens im Wesentlichen identisch zueinander ausgebildet sind.

### Bezugszeichenliste

- 1: Nutzfahrzeug
- 2: Fahrwerk
- 3: Nutzfahrzeugachse
- 4: Achsaggregat
- 5: Achsrohr
- 6: Chassis
- 7: Längsträger
- 8: Achskörper
- 9: Achslappen
- 10: Längslenker
- 11: Federbalg
- 12: Achsbock
- 13: Stützelement
- 14: Schraubverbindungen
- 15: Dämpfer
- 16: Teillängslenker
- 17: Buchse
- 18: Blechteil
- 19: Dämpferlasche
- 20: Zwischenraum
- 21: Spalt
- 22: Puffer
- Z: Zugmaschine

## Patentansprüche

1. Achsaggregat (4) für ein Nutzfahrzeug (1), insbesondere Lastkraftwagen, Anhänger oder Sattelauflieger, mit einem Achskörper (8), einem sich quer zum Achskörper (8) erstreckenden und mit dem Achskörper (8) verbundenen Längslenker (10) und mit einem Achsbock (12) zum Abstützen des Längslenkers (10) gegenüber dem Chassis (6) des Nutzfahrzeugs (1),
**dadurch gekennzeichnet, dass**
der Längslenker (10) wenigstens im Bereich des Achsbocks (12) zwei sich wenigstens im Wesentlichen parallel zueinander erstreckende Teillängslenker (16) umfasst und dass die Teillängslenker (16) über ein den Achsbock (12) wenigstens bereichsweise durchgreifendes Stützelement (13) am Achsbock (12) abgestützt sind.

2. Achsaggregat nach Anspruch 1,
**dadurch gekennzeichnet, dass**
der Längslenker (10) um das Stützelement (13) gegenüber dem Achsbock (12) schwenkbar vorgesehen ist und dass, vorzugsweise, das Stützelement (13) eine mit dem Blechteil (18) verbundene Buchse (17) des Achskörpers (8) durchgreift.

3. Achsaggregat nach Anspruch 1 oder 2,
**dadurch gekennzeichnet, dass**
der Achsbock (12) wenigstens im Bereich des Stützelements (13) als Blechteil (18) ausgebildet ist und dass, vorzugsweise, das Stützelement (13) mit den Teillängslenkern (16) verschraubt ist.

4. Achsaggregat nach Anspruch 3,
**dadurch gekennzeichnet, dass**
der Achsbock (12) wenigstens abschnittsweise aus einem wenigstens im Wesentlichen plattenartigen, sich in einem mit dem Nutzfahrzeug (1) verbundenen Zustand wenigstens im Wesentlichen vertikal erstreckenden Blechteil (18) gebildet ist und/oder dass der Achsbock (12), vorzugsweise das Blechteil (18), zum, vorzugsweise seitlichen, Verbinden, insbesondere Verschrauben, mit einem Längsträger (7) eines Chassis (6) des Nutzfahrzeugs (1) ausgebildet ist.

5. Achsaggregat nach einem der Ansprüche 1 bis 4,
**dadurch gekennzeichnet, dass**
das Achsaggregat (4) einen Dämpfer (15) zum Dämpfen von Schwenkbewegungen des Achskörpers (8) gegenüber dem Achsbock (12) aufweist, dass der Längslenker (10) wenigstens im Bereich des Dämpfers (15) zwei sich wenigstens im Wesentlichen parallel zueinander erstreckende Teillängslenker (16) umfasst und dass der Dämpfer (15) wenigstens abschnittsweise zwischen den Teillängslenkern (16) hindurchgreift.

6. Achsaggregat nach Anspruch 5,
**dadurch gekennzeichnet, dass**
der Dämpfer (15) wenigstens abschnittsweise unterhalb der beiden Teillängslenker (16) mit dem Achskörper (8) und wenigstens abschnittsweise oberhalb der beiden Teillängslenker (16) mit dem Achsbock (12) verbunden ist und/oder dass sich der Dämpfer (15) wenigstens im Wesentlichen parallel zu den beiden Teillängslenkern (16) und/oder dem Längslenker (10) erstreckt.

7. Achsaggregat nach Anspruch 6,
**dadurch gekennzeichnet, dass**
der Achsbock (12) eine Dämpferlasche (19) zum Anbinden des Dämpfers (15) an den Achsbock (12) aufweist und dass, vorzugsweise, die Dämpferlasche (19) aus einem umgeformten Blech ausgebildet und/oder mit dem Blechteil (18) des Achsbocks (12) verbunden ist.

8. Achsaggregat nach einem der Ansprüche 5 bis 7,
**dadurch gekennzeichnet, dass**
der Dämpfer (15) als pneumatischer oder hydraulischer Dämpfer, insbesondere Teleskopdämpfer ausgebildet ist und dass, vorzugsweise, der Teleskopdämpfer als Einrohrstoßdämpfer oder Zweirohrstoßdämpfer ausgebildet ist.

9. Achsaggregat nach einem der Ansprüche 1 bis 8,
**dadurch gekennzeichnet, dass**
der Achskörper (8) ein Achsrohr (5) und wenigstens einen das Achsrohr (5) in Umfangsrichtung des Achsrohrs (5) wenigstens abschnittweise, vorzugsweise um wenigstens 90°, weiter vorzugsweise um wenigstens 130°, umgreifenden und mit dem Achsrohr (5) verbundenen Achslappen (9) umfasst und dass das Achsrohr (5) über den Achslappen (9) mit dem Längslenker (10) und/oder mit dem Dämpfer (15) verbunden ist.

10. Achsaggregat nach Anspruch 9,
**dadurch gekennzeichnet, dass**
der Längslenker (10) wenigstens im Bereich des wenigstens einen Achslappens (9) zwei sich wenigstens im Wesentlichen parallel zueinander erstreckende Teillängslenker (16) umfasst und dass die Teillängslenker (16), insbesondere separat, mit dem Achslappen (9) verbunden sind und dass, vorzugsweise, der Dämpfer (15) zwischen den beiden Teillängslenkern (16) mit dem Achslappen (9) verbunden ist.

11. Achsaggregat nach Anspruch 10,
**dadurch gekennzeichnet, dass**
zwischen den Teillängslenkern (16) im Bereich des wenigstens einen Achslappens (9) wenigsten ein Puffer (22), insbesondere aus Kunststoff oder Gummi, zum Abpuffern eines Anschlagens des Achskörpers (8) an das Chassis (6) des Nutzfahrzeugs (1) vorgesehen ist und dass, vorzugsweise, der Puffer (22) an dem wenigstens einen Achslappen (9) befestigt ist.

12. Achsaggregat nach einem der Ansprüche 1 bis 11,
**dadurch gekennzeichnet, dass**
der Längslenker (10) mit einem dem Achsbock (12) abgewandten Ende mit einem Federbalg (11) verbunden ist und dass, vorzugsweise, der Längslenker (10) wenigstens im Bereich des Federbalgs (11) zwei sich wenigstens im Wesentlichen parallel zueinander erstreckende Teillängslenker (16) umfasst.

13. Achsaggregat nach Anspruch 12,
**dadurch gekennzeichnet, dass**
die Teillängslenker (16), insbesondere separat, mit dem Federbalg (11) verbunden sind und dass, vorzugsweise, der Federbalg (11) sich nach unten auf den Teillängslenkern (16) abstützt.

14. Nutzfahrzeug (1) mit einem Chassis (6) und mit wenigstens einem Achsaggregat (4) nach einem der Ansprüche 1 bis 13.
